# FASCICULE DE BREVET EUROPEEN

(11) **EP 3 840 003 B1**
(45) Date de publication et mention de la délivrance du brevet: **08.05.2024**
(21) Numéro de dépôt: 20211752.9
(22) Date de dépôt: 04.12.2020
(51) Int. Cl.: H01H 23/06, H02G 3/14, H02G 3/08, H01H 13/06, H01H 21/08, H01R 13/52, H02G 3/10

(54) **ENJOLIVEUR ET COMMUTATEUR ÉLECTRIQUE COMPRENANT UN TEL ENJOLIVEUR**
ZIERBLENDE UND ELEKTRISCHER SCHALTER, DER EINE SOLCHE ZIERBLENDE UMFASST
TRIM AND ELECTRICAL SWITCH COMPRISING SUCH A TRIM

(30) Priorité: 20.12.2019 FR 1915119
(43) Date de publication de la demande: 23.06.2021
(73) Titulaire: Legrand France, 87000 Limoges (FR); Legrand SNC, 87000 Limoges (FR)
(72) Inventeur: PUYBARAUD, Eric, 87170 Isle (FR); DUMAS, Eric, 87340 La Jonchère Saint Maurice (FR); GOURINCHAS, Laurent, 87700 Aixe-sur-Vienne (FR)
(74) Mandataire: Jacobacci Coralis Harle

(56) Documents cités:
- EP-A1- 0 905 729
- EP-A1- 1 054 420
- EP-A1- 1 860 748
- WO-A1-96/08024
- DE-B1- 1 806 782
- DE-U1- 29 616 958
- US-A1- 2017 125 191

## Description

La présente invention concerne de manière générale le domaine des commutateurs électriques.

Elle concerne plus particulièrement un enjoliveur d'un commutateur électrique étanche, cet enjoliveur comportant une membrane souple d'étanchéité et une paroi frontale rigide comportant au moins une fenêtre dans laquelle s'étend une plaquette rigide destinée à être déplacée sous l'action d'une force de pression s'exerçant sur ladite plaquette rigide, ladite plaquette rigide étant reliée au bord de la fenêtre au moyen d'une partie de la membrane souple d'étanchéité.

Un commutateur électrique étanche comporte généralement un boîtier et un couvercle étanche formant un volume interne dans lequel est positionné un mécanisme d'appareillage. Le commutateur électrique comprend des moyens de commande du mécanisme d'appareillage positionnés à l'extérieur du volume interne du boîtier. Les moyens de commande actionnent le mécanisme d'appareillage au travers du couvercle étanche.

Afin de garantir l'étanchéité du commutateur électrique, le couvercle est muni d'une membrane d'étanchéité qui recouvre le mécanisme d'appareillage.

On connaît du document DE1806782 un commutateur électrique étanche. Plus précisément, ce commutateur électrique comprend un boîtier sur lequel est monté un enjoliveur. L'enjoliveur est formé d'une paroi frontale rigide et d'une touche de commande. Une membrane d'étanchéité positionnée entre le boîtier et la paroi frontale rigide permet de garantir le caractère étanche de ce commutateur électrique.

Actuellement, deux configurations d'actionnement du mécanisme d'appareillage au travers de cette membrane d'étanchéité sont connues.

Selon une première configuration, la membrane d'étanchéité présente des ouvertures permettant à des éléments de commande de la traverser pour venir s'encastrer directement sur le mécanisme d'appareillage. L'ajustement des ouvertures de la membrane d'étanchéité autour des éléments de commande permet de garantir l'étanchéité du commutateur électrique ainsi qu'une liaison mécanique entre ces moyens de commande et le mécanisme d'appareillage.

Cependant, une mauvaise introduction des éléments de commande au travers des ouvertures de la membrane d'étanchéité peut entraîner des déchirures de cette membrane (et donc altérer l'étanchéité) ou une mauvaise liaison mécanique entre les moyens de commande et le mécanisme d'appareillage (provoquant alors un fonctionnement instable du commutateur électrique).

Selon une deuxième configuration, la membrane d'étanchéité n'est pas percée et recouvre complètement le mécanisme d'appareillage. L'actionnement du mécanisme d'appareillage s'effectue par la déformation de cette membrane d'étanchéité par les moyens de commande.

Cependant, cette configuration entraîne des frottements entre les matières plastiques formant les moyens de commande, la membrane d'étanchéité et le mécanisme d'appareillage. Ces frottements gênent le fonctionnement des différents éléments du commutateur électrique. De plus, ils accélèrent l'usure de la membrane d'étanchéité et peuvent causer sur le long-terme une rupture de cette membrane.

Le but de la présente invention est donc de proposer un enjoliveur d'un commutateur électrique étanche, dans lequel les moyens de commande du commutateur électrique actionnent le mécanisme d'appareillage sans agir directement sur la membrane d'étanchéité qui recouvre ledit mécanisme afin de garantir simultanément un actionnement fiable du mécanisme et une étanchéité pérenne du commutateur électrique.

Plus particulièrement, on propose selon l'invention un enjoliveur conforme à la revendication 1.

Ainsi, avantageusement selon l'invention, l'enjoliveur comprend une plaquette rigide et des ouvertures comblées par la membrane souple d'étanchéité. Cet enjoliveur est complètement fermé et donc étanche. L'actionnement du mécanisme d'appareillage se fait ici grâce au déplacement de la plaquette rigide. La membrane d'étanchéité n'est donc pas percée et n'est donc pas directement soumise aux contraintes exercées sur le mécanisme d'appareillage pour assurer le fonctionnement du commutateur électrique étanche. L'intégrité de la membrane souple d'étanchéité est donc préservée lors du fonctionnement du commutateur électrique. L'étanchéité du commutateur électrique est donc garantie tout au long de son utilisation.

D'autres caractéristiques non limitatives et avantageuses de l'enjoliveur conforme à l'invention, prises individuellement ou selon toutes les combinaisons techniquement possibles, sont décrites dans les revendications 2 à 8.

L'invention concerne également un commutateur électrique conforme aux revendications 9 à 11.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique assemblée en perspective d'un commutateur électrique comprenant une boîte électrique et un enjoliveur conforme à l'invention,
- la figure 2 est une vue schématique avant en perspective éclatée du commutateur électrique de la figure 1,
- la figure 3 est une vue schématique arrière en perspective éclatée du commutateur électrique de la figure 1,
- la figure 4 est une vue schématique en perspective avant d'une paroi frontale rigide d'un enjoliveur destiné à être intégré dans un commutateur électrique conforme à l'invention,
- la figure 5 est une vue schématique partielle en perspective avant de la paroi frontale rigide de l'enjoliveur de la figure 4,
- la figure 6 est une vue en coupe selon le plan B-B de la figure 4 de la paroi frontale rigide d'un enjoliveur de la figure 4,
- la figure 7 est une vue en coupe selon le plan A-A de la figure 4 de la paroi frontale rigide d'un enjoliveur de la figure 4, et
- la figure 8 est un schéma de principe partiel du commutateur électrique conforme à l'invention.

Dans la description qui va suivre, les termes « avant » et « arrière » seront utilisés par rapport à la direction du regard d'une personne sur l'élément décrit. L'avant de cet élément désigne le côté tourné vers la personne le regardant tandis que l'arrière désigne le côté tourné vers le support sur lequel est rapporté ledit élément. Ainsi, lorsqu'un commutateur électrique 100 est installé dans une pièce, l'avant désigne le côté tourné vers l'intérieur de la pièce, et l'arrière désigne le côté tourné à l'opposé, vers l'extérieur de la pièce.

Les termes « intérieur » et « extérieur » seront utilisés en référence au commutateur électrique 100 lui-même, pour désigner respectivement le côté d'un élément tourné vers le centre du commutateur électrique et le côté d'un élément tourné vers l'extérieur de ce commutateur.

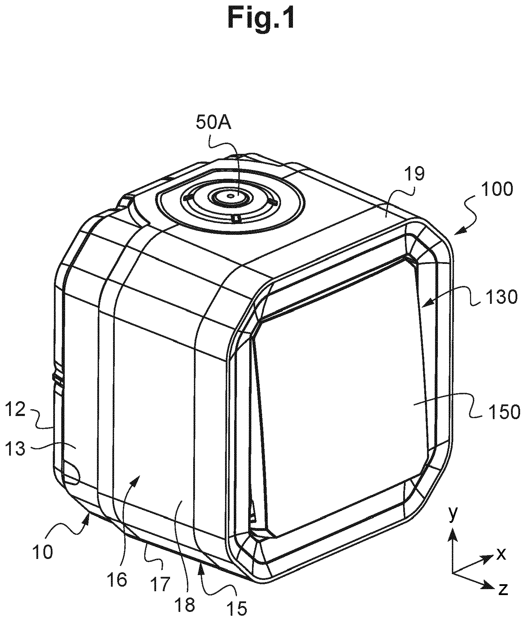

Sur les figures 1 à 3, on a représenté un commutateur électrique 100 étanche conforme à l'invention. Ce commutateur électrique 100 peut être de tout type, actionné extérieurement par au moins une touche de commande 150.

Il peut s'agir d'un interrupteur simple, d'un interrupteur double ou d'un va-et-vient. Mais l'invention concerne tout type de commutateur électrique.

Le mode de réalisation représenté sur les figures 1 à 3 correspond à un commutateur électrique simple touche, dans le sens où une seule touche de commande d'un enjoliveur permet d'actionner un entraîneur pour ouvrir ou fermer un seul circuit électrique d'un moteur.

Le commutateur électrique 100 représenté sur les figures 1 à 3 comprend, d'une part, un moteur 110 pourvu d'un socle 112 logeant des bornes de connexion électrique (non représentées) à raccorder au réseau électrique local selon le mode de fonctionnement du commutateur électrique, et, d'autre part, un enjoliveur 130 (qui donne sa fonction au commutateur électrique).

Ici, le moteur 110 est logé dans une boîte électrique 10 destinée à être rapportée en saillie sur une paroi murale. Selon une variante non représentée, il pourrait être rapporté sur un cadre d'encastrement destiné à être monté sur une boîte d'encastrement encastrée dans une ouverture de ladite paroi murale.

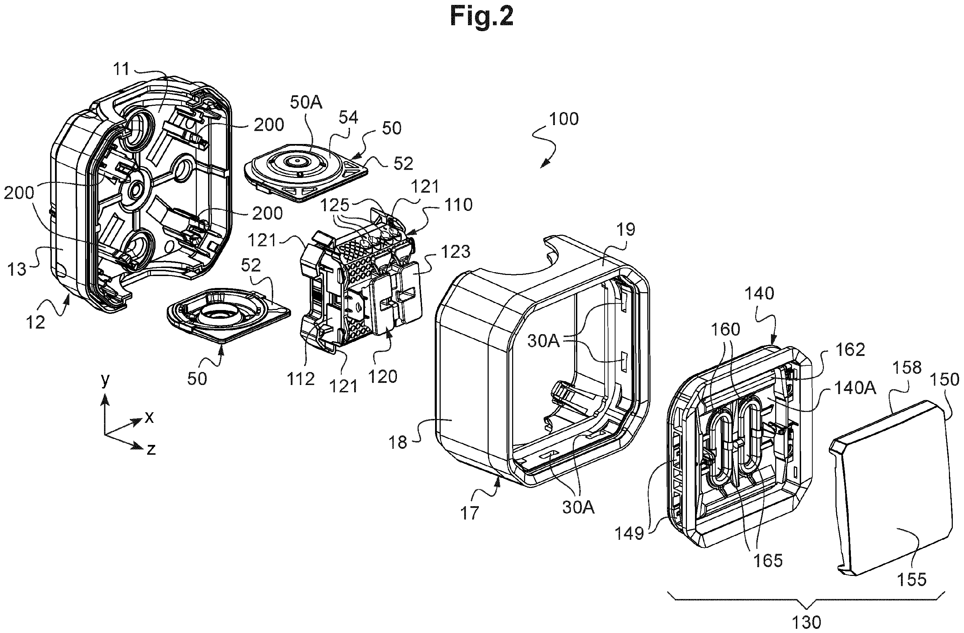

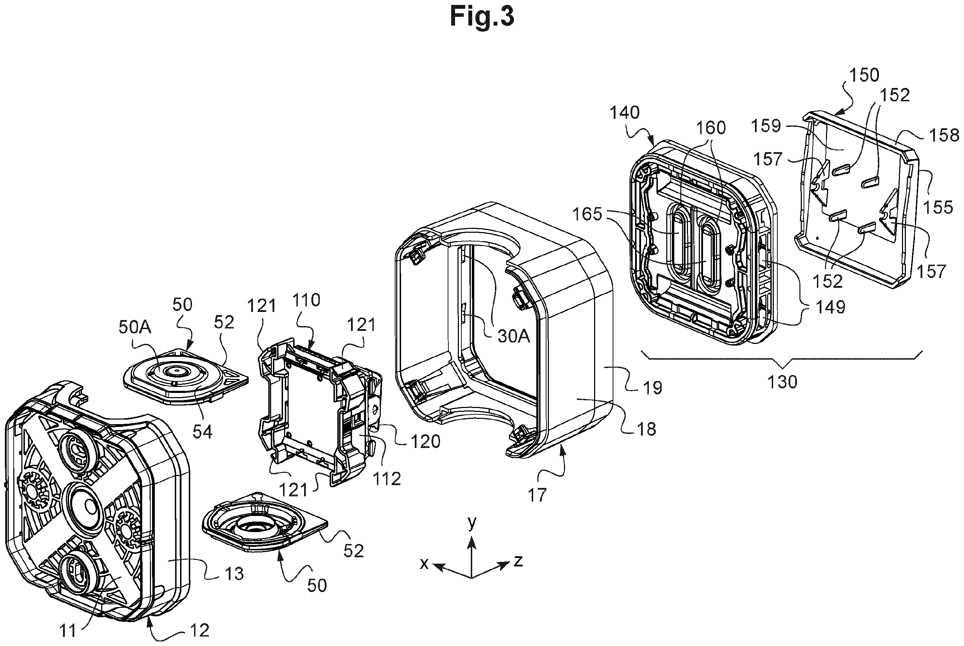

L'enjoliveur 130, qui sera décrit plus en détails ultérieurement, ferme de manière étanche l'avant de la boîte électrique 10 ou du cadre d'encastrement dans lequel est monté le socle 112 du moteur 110, équipé d'un entraîneur 120 (figures 2 et 3). Il porte la touche de commande 150 adaptée à agir sur l'entraîneur 120 du moteur 110 pour commander l'ouverture et la fermeture des circuits électriques du commutateur électrique 100. En variante, le moteur pourrait être équipé de plusieurs entraîneurs, l'enjoliveur associé pourrait alors porter plusieurs touches de commande adaptées à agir sur les différents entraîneurs.

Le socle 112 du moteur 110 se présente sous la forme d'une enveloppe isolante. Cette enveloppe isolante peut être réalisée d'une seule pièce en matière plastique moulée. Le socle 112 présente globalement une forme parallélépipédique.

La boîte électrique 10 ne faisant pas partie de la présente invention, elle ne sera pas ici décrite dans le détail. Pour l'essentiel, comme le montrent les figures 1 à 3, la boîte électrique 10 comprend un corps 15 qui présente ici une forme globalement parallélépipédique. Elle pourrait présenter une forme différente, par exemple cylindrique.

Ce corps 15 comprend une paroi latérale 16 qui est fermée à l'arrière par une paroi de fond 11 (figures 2 et 3). La paroi latérale 16 et la paroi de fond 11 délimitent un logement de réception adapté à recevoir le moteur 110. Ce logement de réception est ouvert à l'avant pour permettre l'accès au moteur 110 rapporté dans ledit logement.

Comme le montrent les figures 1 à 3, le corps 15 est en pratique réalisé en deux parties principales distinctes : une partie arrière 12 appelée dans la suite du texte « platine-support 12 » et une partie avant 17 appelée par la suite « cadre 17 ». La platine-support 12 est prévue pour être fixée à la cloison ou paroi murale et supporter le moteur 110, tandis que le cadre 17 a une fonction de protection de ce moteur 110 et de support de moyens d'interface (en particulier un enjoliveur 130) permettant à l'utilisateur d'interagir avec le moteur 110.

En variante, le corps pourrait être réalisé en une seule partie.

Comme le montrent les figures 1 à 3, la platine-support 12 comprend la paroi de fond 11 bordée par une paroi latérale 13 qui s'élève à partir de la paroi de fond 11, sensiblement perpendiculairement à cette dernière.

Pour permettre le montage du moteur 110 dans la boîte électrique 10, la paroi de fond 11 de la platine-support 12 porte des montants 200 (figure 2). Ces montants 200 s'étendent, à l'intérieur dudit logement de réception, vers l'avant à partir de la paroi de fond 11. Ils s'étendent perpendiculairement à celle-ci. Les montants 200 comprennent en particulier des moyens de montage d'un socle 112 du moteur 110. Ces moyens de montage sont par exemple des moyens d'encliquetage qui reçoivent des moyens d'encliquetage 121 complémentaires prévus sur le socle 112 du moteur 110. Ces moyens de montage présents sur les montants 200 permettent alors, lors du montage du moteur 110 dans la boîte électrique 10, de positionner le socle 112 du moteur 110 dans la boîte électrique 10 à une distance déterminée de la paroi de fond 11 de la platine-support 12 de manière à laisser un espace libre pour placer aisément les fils de raccordement électrique.

Par ailleurs, comme le montrent les figures 2 et 3, le cadre 17 est formé par l'association par emboîtement par clipsage d'un manchon formé par une paroi latérale 18 et d'une rehausse 19. Cette paroi latérale 18 du cadre 17 est prévue pour être rapportée, par emboîtement, sur la paroi latérale 13 de la platine-support 12 pour s'étendre dans le prolongement de celle-ci de manière à former la paroi latérale 16 du corps 15. Un joint d'étanchéité (ici non représenté) est positionné entre la platine-support 12 et le cadre 17 de manière à assurer un assemblage étanche entre la platine-support 12 et le cadre 17.

Comme le montrent les figures 1 à 3, la paroi latérale 18 du cadre 17 et la paroi latérale 13 de la platine-support 12 sont conformées pour recevoir au moins un embout passe-câble 50. Ici, la boîte électrique 10 comprend deux embouts passe-câble 50.

Comme le montrent les figures 2 et 3, chaque embout passe-câble 50 comporte une plaquette support 52 munie d'un bord périphérique intérieur qui délimite une ouverture 50A pour le passage d'un câble électrique ou d'une gaine électrique de type ICTA ou d'un tube IRL. Chaque embout passe-câble 50 comprend également un élément d'étanchéité 54 souple et perforable, surmoulé au moins partiellement sur la plaquette support 52, qui obture ladite ouverture 50A et qui est adapté à être traversé par le câble électrique ou le tube de type IRL ou la gaine électrique de type ICTA.

Par ailleurs ici, le cadre 17 est conçu pour recevoir l'enjoliveur 130. Pour cela, il comprend, sur une partie avant de la paroi latérale 18, des orifices 30A de fixation de l'enjoliveur 130. Ces orifices 30A sont adaptés à recevoir des éléments permettant le montage de l'enjoliveur 130 sur le cadre 17. Ces éléments (non visibles) de montage sont par exemple des éléments quart-de-tour, manoeuvrables depuis la face avant de l'enjoliveur 130.

Ici, le socle 112 du moteur 110 comporte ici six logements (non représentés), isolés les uns des autres, pour accueillir trois ou six bornes de connexion électrique en fonction qu'il s'agisse d'un commutateur électrique simple touche (figures 1 à 3) ou d'un commutateur électrique double touche (non représenté). Le socle 112 est donc le même que le commutateur électrique comprenne une touche de commande ou deux touches de commande.

Dans le mode de réalisation de l'invention représenté sur les figures 1 à 3, le moteur 110 est équipé de trois bornes de connexion électrique (seules deux bornes de connexion électrique sont visibles sur la figure 2) formant un circuit électrique. Les bornes de connexion électrique sont ici des bornes de connexion automatique.

Pour son raccordement électrique à une des bornes de connexion électrique logée dans un desdits logements du socle 112, l'extrémité dénudée d'un fil électrique (non représenté) provenant du réseau d'alimentation, est introduite, via une ouverture d'accès 125 (figure 2) prévue sur une partie latérale du socle 112, à l'intérieur de la borne de connexion électrique.

Comme le montre la figure 2, ici il est prévu une paire d'ouvertures d'accès 125 par borne de connexion électrique. Dans chaque paire d'ouvertures d'accès 125, l'une des ouvertures d'accès 125 donne accès, depuis l'extérieur du moteur 110, à un logement pour l'alimentation électrique d'une borne de connexion électrique logée dans ce logement tandis que l'autre ouverture d'accès est utilisée pour un éventuel repiquage de la borne de connexion électrique.

De manière classique, l'entraîneur 120 est associé à une seule commande et donc un seul circuit électrique. Ainsi, sur l'exemple représenté sur la figure 2, l'entraîneur 120 du moteur 110, actionné par une seule touche de commande 150, provoque l'ouverture et la fermeture d'un seul circuit électrique.

Selon une variante non représentée, le moteur peut comprendre deux entraîneurs actionnés par deux touches de commande provoquant l'ouverture et la fermeture de deux circuits électriques.

L'entraîneur 120 est monté mobile à pivotement autour d'un axe de basculement (non représenté) par rapport au socle 112 du moteur 110. Il s'étend de part et d'autre de son axe de basculement à l'avant de socle 112.

De manière classique, comme le montre la figure 2, l'entraîneur 120 comprend, à l'avant, une partie supérieure 123 et, à l'arrière, un élément tubulaire (non visible sur les figures). L'entraîneur 120 est préférentiellement réalisé d'une seule pièce en matière plastique moulée.

La partie supérieure 123 de chaque entraîneur 120 est montée à l'avant du socle 112, grâce à des tourillons (non visibles) engagés dans des paliers (non représentés) du socle 112, de manière à fermer partiellement le socle 112 à l'avant, l'élément tubulaire de l'entraîneur 120 s'étendant à l'intérieur dudit socle 112.

La largeur de la partie supérieure 123 de l'entraîneur 120 dépend du type de commande (simple ou double) du commutateur électrique 100.

En considérant une largeur standard dite « d'un module », dans le cas d'une commande simple touche comme représenté sur les figures 2 et 3, l'entraîneur 120 présente une largeur égale au double de la largeur standard, ou une largeur dite de « deux modules ». Dans ce cas, l'entraîneur 120 présente une forme dissymétrique avec la présence d'un seul élément tubulaire au droit des logements du socle 112 équipés des trois bornes de connexion électrique mais pas au niveau des logements vides du socle 112

En variante, dans le cas d'une commande double touche (non représentée), il est prévu deux entraîneurs, chaque entraîneur présentant une largeur d'un module (et chaque entraîneur comportant son propre élément tubulaire).

La présente invention porte plus particulièrement sur l'agencement de l'enjoliveur 130 du commutateur électrique 100 qui, avantageusement, permet de faire basculer l'entraîneur 120 du moteur 110 tout en garantissant l'étanchéité durable du commutateur électrique 100.

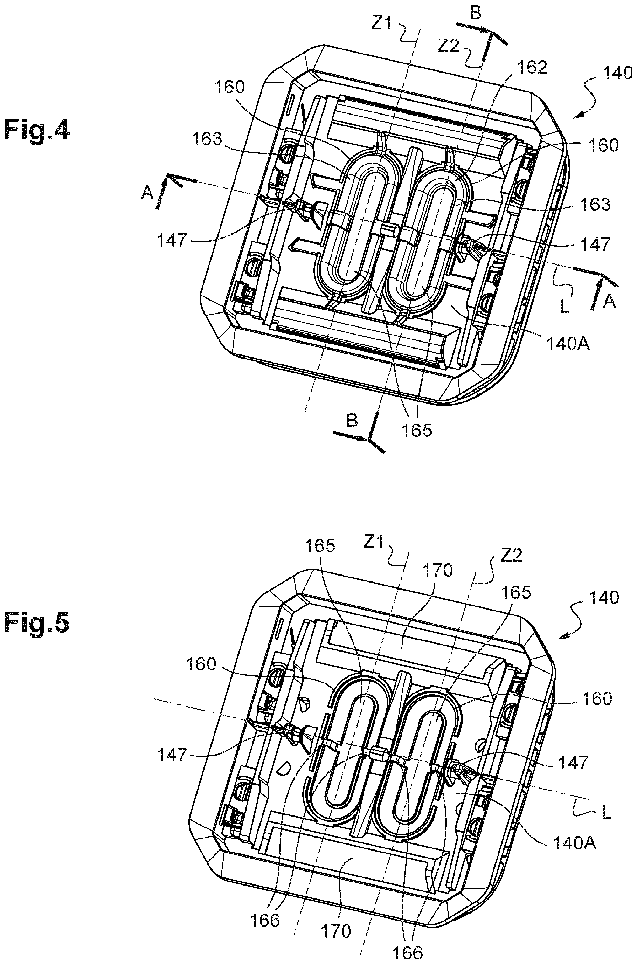

L'enjoliveur 130 est représenté plus particulièrement sur les figures 4 à 7.

L'enjoliveur 130 comporte une paroi frontale rigide 140 sur laquelle est montée la touche de commande 150 et une membrane souple d'étanchéité 162.

La paroi frontale rigide 140 présente une forme adaptée à l'ouverture avant de la boîte électrique 10 pour le montage en saillie, de sorte qu'elle ferme cette ouverture avant. En variante, la paroi frontale rigide peut présenter une forme adaptée à l'ouverture avant du cadre pour le montage encastré, pour fermer l'ouverture avant.

La paroi frontale rigide 140 forme donc un couvercle qui ferme à l'avant le commutateur électrique 100 en se fixant sur la boîte électrique 10 disposée en saillie ou sur le cadre d'encastrement au moyen d'éléments de fixation (non représentés) introduits au travers d'orifices 149 (figure 2) percés par exemple dans des branches latérales opposées de la paroi frontale rigide 140.

La paroi frontale rigide 140 équipée de la membrane souple d'étanchéité 162 se place au-dessus de l'entraîneur 120. Elle isole de l'extérieur le moteur 110 équipé de son entraîneur 120, pour le protéger des poussières ou des liquides qui pourraient l'endommager.

Ici, la paroi frontale rigide 140 porte des moyens de basculement 147 alignés selon un même axe médian L, servant au montage à basculement de la touche de commande 150 de l'enjoliveur 130. Plus particulièrement, ces moyens de basculement 147 se présentent sous la forme de montants s'étendant vers l'avant et destinés à recevoir par emboîtement des moyens de montages complémentaires 157 de la touche de commande 150.

Pour cela, la touche de commande 150 présente, sur une face arrière 159 d'une paroi d'appui 155 d'un doigt d'un utilisateur, des montants 157 s'étendant vers l'arrière et dont l'extrémité libre présente une forme complémentaire de l'extrémité libre des moyens de basculement 147 de la paroi frontale rigide 140 de l'enjoliveur 130 afin de permettre leur assemblage. Lorsque l'assemblage est effectué, la touche de commande 150 est apte à basculer autour de l'axe médian L formant l'axe de basculement (figures 4 et 5) entre deux positions stables.

En variante, la touche de commande pourrait être de type poussoir, les moyens de réception de la touche de commande sur la paroi frontale rigide étant donc adaptés à un commutateur de type « push-push ».

La largeur de chaque touche de commande 150 dépend du type de commande (simple ou double) du commutateur électrique 100. Ici, il s'agit d'une commande simple touche (figures 1 à 3), l'enjoliveur 130 comprend donc une unique touche de commande 150 qui présente une largeur de deux modules. Elle est associée à l'entraîneur 120 du moteur 110.

Selon une variante non représentée, dans le cas d'une commande double touche, l'enjoliveur comprendrait deux touches de commande indépendantes, juxtaposées selon l'axe médian L, chacune présentant une largeur d'un module. Chaque touche de commande serait associée à un entraîneur.

La touche de commande 150, actionnée par un utilisateur, est adaptée à agir sur l'entraîneur 120 au travers de ladite paroi frontale rigide 140 pour le faire basculer entre deux positions extrêmes afin d'ouvrir ou de fermer le circuit électrique de moteur 110.

Pour cela, comme le montrent les figures 2 à 5, la paroi frontale rigide 140 de l'enjoliveur 130 comprend au moins une fenêtre 160. Ici, la paroi frontale rigide 140 de l'enjoliveur 130 comprend deux fenêtres 160. La touche de commande 150 est donc adaptée à agir sur l'entraîneur 120 au travers de la fenêtre 160 de la paroi frontale rigide 140 de l'enjoliveur 130.

Les deux fenêtres 160 sont positionnées selon deux axes parallèles Z1, Z2 (voir figure 4 et 5) perpendiculaires à l'axe médian L.

Comme le montrent les figures 4 et 5, chaque fenêtre 160 présente une forme allongée définie par un axe longitudinal, ici l'axe Z1, Z2, et un axe transversal, ici l'axe médian L. Ici, chaque fenêtre 160 est de forme elliptique mais elle pourrait, en variante, être de forme rectangulaire.

Comme cela est représenté sur les figures 2 à 5, une plaquette rigide 165 s'étend à l'intérieur de chaque fenêtre 160. Selon l'invention, cette plaquette rigide 165 est destinée à être déplacée sous l'action d'une force de pression exercée par la touche de commande 150 afin d'agir sur l'entraîneur 120 (en étant pressée contre celui-ci). C'est donc par l'intermédiaire du déplacement de la plaquette rigide 165 que l'entraîneur 120 est basculé par la touche de commande 150 au travers de la paroi frontale rigide 140.

Chaque plaquette rigide 165 est positionnée au centre de la fenêtre 160 associée selon l'axe Z1, Z2 et selon l'axe médian L. Les deux plaquettes rigides 165 sont positionnées de manière parallèle selon les deux axes Z1, Z2. Chaque plaquette rigide 165 présente une forme allongée selon l'axe Z1, Z2, par exemple ici elliptique. Plus particulièrement, comme le montrent les figures 2 à 5, chaque plaquette rigide 165 et la fenêtre 160 associée présentent des formes concentriques oblongues.

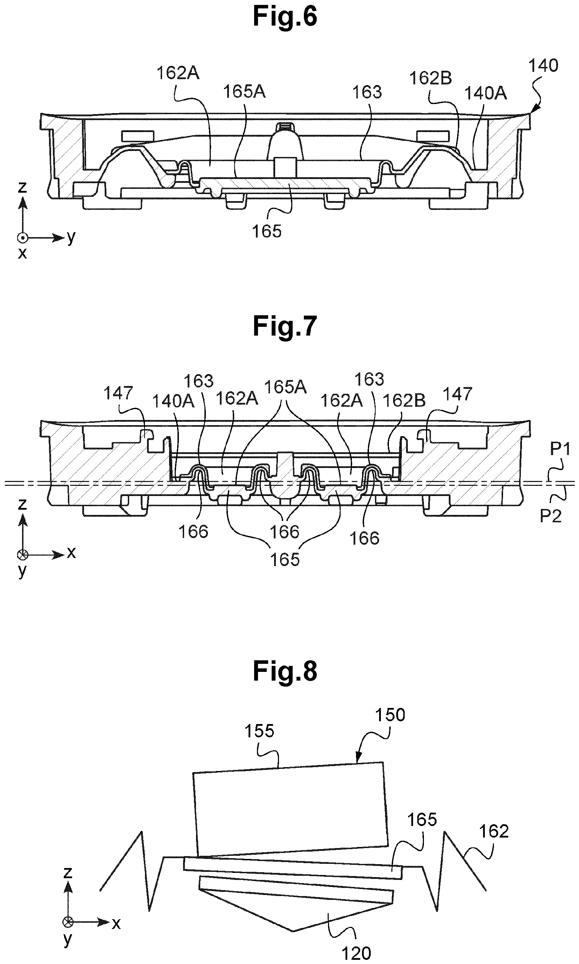

Avantageusement selon l'invention, comme le montrent plus particulièrement les figures 5 et 7, chaque plaquette rigide 165 est reliée au bord de la fenêtre 160 associée au moyen d'une articulation. Cette articulation relie les deux côtés longitudinaux, c'est-à-dire ici alignés avec l'axe Z1, Z2, du bord de chaque plaquette rigide 165 à deux côtés longitudinaux (alignés aussi ici avec l'axe Z1, Z2) du bord de la fenêtre 160 associée.

Cette articulation permet d'autoriser le déplacement de chaque plaquette rigide 165 dans chaque fenêtre 160 sous l'action de la force de pression exercée par la touche de commande 150.

Selon l'invention chaque articulation est formée par deux languettes 166 alignées selon l'axe transversal de la fenêtre, c'est-à-dire ici selon l'axe médian L (figure 5). Ainsi, une languette 166 de l'articulation s'étend d'un côté longitudinal de la plaquette rigide 165 considérée à un côté longitudinal de la fenêtre 160 associée tandis que l'autre languette 166 de l'articulation s'étend de l'autre côté longitudinal de la plaquette rigide 165 considérée à un autre côté longitudinal de la fenêtre 160 associée.

Comme le montrent les figures 5 et 7, chaque languette 166 présente une forme de vague dont une extrémité est reliée au bord de la fenêtre 160 et l'autre extrémité est reliée au bord de la plaquette rigide 165 associée.

Comme le montre plus particulièrement la figure 7, l'extrémité de chaque languette 166 reliée au bord de la fenêtre 160 est située dans un premier plan P1. L'autre extrémité de chaque languette 166, reliée au bord de la plaquette rigide 165, est elle située dans un deuxième plan P2.

Selon l'invention, comme le montre la figure 7, en considérant la direction orthogonale à la plaquette rigide 165 et dirigée de l'avant vers l'arrière (c'est-à-dire dans le sens opposé de l'axe z défini sur la figure 7), le deuxième plan P2 est situé en dessous du premier plan P1. L'extrémité de chaque languette 166 reliée au bord de la plaquette rigide 165 est donc située en retrait, vers l'arrière, par rapport à l'extrémité de chaque languette 166 reliée au bord de la fenêtre 160 associée. Ainsi, la face avant 165A de chaque plaquette rigide 165 est décalée vers l'arrière par rapport à la face avant 140A de la paroi frontale rigide 140. En d'autres termes, comme le montrent les figures 5 et 7, chaque plaquette rigide 165 n'est pas alignée avec la paroi frontale rigide 140 mais présente un décalage vers l'arrière par rapport à celle-ci. Chaque articulation composée des deux languettes flexibles forme donc une charnière étagée pour le déplacement de la plaquette rigide 165 associée. Cette charnière étagée permet d'autoriser un déplacement en rotation (autour de l'axe y représenté sur les figures) et en translation (selon l'axe x) de la plaquette rigide 165 dans la fenêtre 160 lorsqu'une force de pression est exercée sur celle-ci par la touche de commande 150.

Ici, chaque plaquette rigide 165 et les languettes 166 associées sont réalisées par moulage, d'une seule pièce avec la paroi frontale rigide 140. L'ensemble formé par la plaquette rigide 165, les languettes 166 associées et la paroi frontale rigide 140 est par exemple réalisé en matière plastique moulée.

De manière avantageuse selon l'invention, afin de garantir l'étanchéité du commutateur électrique 100, dans chaque fenêtre 160, l'espace ouvert disponible entre la plaquette rigide 165 associée et le bord de la fenêtre 160 est obturé complètement par une partie 162A de la membrane souple d'étanchéité 162.

Ainsi, comme le montre la figure 4, grâce à la partie 162A de la membrane souple d'étanchéité 162 et à chaque plaquette rigide 165, chaque fenêtre 160 est complètement fermée, permettant de garantir l'étanchéité du commutateur électrique 100 en isolant le moteur 110 des poussières et liquides.

Comme le montrent les figures 4, 6 et 7, une autre partie 162B de la membrane souple d'étanchéité 162 s'étend dans l'espace ouvert défini dans des fenêtres annexes 170 (ces fenêtres ne faisant pas partie du coeur de l'invention, elles ne sont pas décrites plus en détails ici).

Dans chaque fenêtre 160, la partie 162A de la membrane souple d'étanchéité 162 est réalisée par surmoulage d'une matière souple autour de la plaquette rigide 165.

Selon l'invention, comme le montrent les figures 4 et 7, la partie de la membrane souple d'étanchéité 162 reliant chaque plaquette rigide 165 au bord de la fenêtre 160 associée recouvre la face avant des languette 166 reliant ladite plaquette rigide 165 à la fenêtre 160 correspondante.

De manière avantageuse selon l'invention, la partie 162A de la membrane souple d'étanchéité 162, obturant l'espace ouvert entre chaque plaquette rigide 165 et le bord de la fenêtre 160 associée, forme un soufflet 163. Chaque soufflet 163 s'étend exclusivement entre tout le bord de la plaquette rigide 165 et tout le bord de la fenêtre 160 associée. De cette manière, seul l'espace libre entre chaque plaquette rigide 165 et la fenêtre 160 associée est obturé par ladite partie 162A de la membrane souple d'étanchéité 162 afin de fermer la fenêtre 160 correspondante.

Comme cela est représenté plus particulièrement sur les figures 4, 6 et 7, chaque soufflet 163 présente une forme de vague. Cette forme de vague est semblable à celle des languettes 166 formant l'articulation reliant les bords de la plaquette rigide 165 aux bords de la fenêtre 160.

La forme de vague de la partie 162A de la membrane souple d'étanchéité 162 permet d'augmenter sa flexibilité en augmentant la surface de membrane souple d'étanchéité 162 entre chaque plaquette rigide 165 et le bord de la fenêtre 160 correspondante.

Ainsi, lorsque chaque plaquette rigide 165 est déplacée sous l'action d'une force de pression exercée par la touche de commande 150, la forme du soufflet 163 de la partie 162A de la membrane souple d'étanchéité 162 est adaptée à absorber la pression générée par le déplacement de la plaquette rigide 165. La partie 162A de la membrane souple d'étanchéité 162 associée n'est donc pas soumise directement aux contraintes exercées par le déplacement de la plaquette rigide 165 et permet de garantir l'étanchéité du commutateur électrique 100.

On notera que, sur la figure 6, la membrane souple d'étanchéité 162 s'étend au-delà de la forme de vague constituant le soufflet 163. Comme décrit précédemment, cette partie supplémentaire correspond à la partie de la membrane souple d'étanchéité s'étendant dans l'espace ouvert défini dans les fenêtres annexes 170.

La force de pression provoquant le déplacement de chaque plaquette rigide 165 associée à chaque fenêtre 160 est générée par l'appui d'un doigt d'un utilisateur sur la paroi d'appui 155 de la touche de commande 150 (figure 2).

Comme le montre la figure 3, la face arrière 159 de la paroi d'appui 155 porte les montants 157 précédemment décrits ainsi qu'au moins deux plots 152. Ces plots 152 sont deux à deux alignés sur un même axe longitudinal (non représenté) orthogonal à l'axe médian L (formant l'axe de basculement de la touche de commande 150) et disposés de part et d'autre de l'axe médian L.

Comme le montre également la figure 3, chaque plot 152 s'étend sensiblement perpendiculairement à ladite face arrière 159 et présente une forme allongée dont l'extrémité libre est de forme arrondie. Les plots 152 sont formés d'une seule pièce avec la touche de commande 150.

Dans le cas d'un commutateur électrique 100 simple touche (figure 3), la face arrière 159 de la touche de commande 150 comprend quatre plots 152, alignés deux à deux selon deux axes parallèles longitudinaux (non représentés) perpendiculaires à l'axe médian L.

Dans le cas d'un commutateur électrique double touche (non représenté), la face arrière de chaque touche de commande comprend un couple de deux plots alignés selon un axe longitudinal perpendiculaire à l'axe médian L.

Lors du basculement de la touche de commande 150, les plots 152 sont destinés à prendre appui sur chaque plaquette rigide 165 de la fenêtre 160 pour les déplacer.

Pour cela, de manière préférentielle, la hauteur de chaque plot 152 est déterminée de manière à ce que l'extrémité d'un plot 152 soit placée à distance de la plaquette rigide 165 lorsque la touche de commande 150 est basculée dans une première position tandis que l'extrémité de l'autre plot 152 prend appui sur la plaquette rigide 165. De manière avantageuse, les plots 152 n'exercent pas de tension sur les plaquettes rigides 165, afin par exemple de ne pas rompre la partie 162A de la membrane souple d'étanchéité 162 reliant chaque plaquette rigide 165 au bord de la fenêtre 160 associée, et donc de garantir dans le temps l'étanchéité du commutateur électrique 100.

Dans le cas d'un commutateur électrique 100 simple touche (figures 1 à 3), les plots 152 déplacent simultanément les deux plaquettes rigides 165 des deux fenêtres 160 de la paroi frontale rigide 140 de l'enjoliveur 130. Le déplacement de ces deux plaquettes rigides 165 ne se fait donc pas de manière indépendante. Les deux plaquettes rigides 165 sont donc toutes les deux déplacées simultanément de manière similaire.

En variante, dans le cas d'un commutateur double touche (non représenté), le déplacement de chaque plaquette rigide 165 se fait de manière indépendante l'une de l'autre.

Comme cela est représenté sur la figure 3, la paroi d'appui 155 de la touche de commande 150 est bordée extérieurement par un rebord 158 qui s'étend vers l'arrière. On définit deux régions opposées de ce rebord 158 positionnées sur l'axe longitudinal portant les plots 152, à proximité de cet axe. La hauteur du rebord 158 dans ces deux régions opposées est déterminée de manière à ce que, lorsque la touche de commande 150 est dans l'une des deux positions stables, le rebord 158 vient en appui sur la face avant de la paroi frontale rigide 140 de l'enjoliveur 130.

Le rebord 158 peut présenter cette hauteur de manière constante sur tout le pourtour de la touche de commande 150 (et non pas uniquement dans les deux régions opposées précédemment définies).

De manière avantageuse, la plaquette rigide 165 est déplacée pour agir sur l'entraîneur 120, situé au droit de ladite plaquette rigide 165, afin de le faire basculer pour permettre l'ouverture ou la fermeture du circuit électrique du moteur 110.

Pour cela, la partie supérieure 123 de l'entraîneur 120 est positionnée en regard de chaque plaquette rigide 165, de manière que, lorsqu'elle est déplacée, la plaquette rigide 165 est pressée contre l'entraîneur 120 (entraînant alors son basculement).

La figure 8 représente, sur un schéma de principe, une touche de commande 150 de l'enjoliveur 130 du commutateur électrique 100 dans un état intermédiaire de basculement : préalablement, la touche de commande 150 était dans un état stable, basculée du côté droit, et elle est par exemple à présent basculée du côté gauche. Sur la figure 8, l'entraîneur 120 est dans une position stable basculée également du côté droit et la plaquette rigide associée 165 est sensiblement en regard de l'entraîneur 120.

Lorsque la touche de commande 150 est basculée du côté gauche (comme cela est représenté de manière schématique sur la figure 8), l'extrémité gauche de celle-ci est rapprochée de la paroi frontale rigide 140 de l'enjoliveur 130. Les plots 152 situés du côté gauche sont alors mis en contact avec les plaquettes rigides 165 (ici de manière simultanée car il s'agit d'un commutateur électrique simple touche). Ils exercent alors une force de pression sur chaque plaquette rigide 165 qui va engendrer leur déplacement.

Le déplacement subi par chaque plaquette rigide 165 se décompose en deux parties. Dans un premier temps, le contact d'un plot 152 sur la plaquette rigide 165 associée entraîne son déplacement en rotation autour de l'axe y. L'extrémité gauche de chaque plaquette rigide 165 est donc basculée vers l'arrière (selon la direction opposée à l'axe z) dans un mouvement de rotation. Grâce à la charnière étagée constituée par l'articulation formée des deux languettes 166 et de la flexibilité générée par le soufflet 163 formant la partie 162A de la membrane souple d'étanchéité reliant chaque plaquette rigide 165 au bord de la fenêtre 160 associée, chaque plaquette rigide 165 subit également un mouvement de translation selon l'axe x. La combinaison de mouvement de rotation et du mouvement de translation permet de presser la plaquette rigide 165 contre l'entraîneur 120 afin de faire basculer l'entraîneur 120 dans son autre état stable, ici du côté gauche. L'agencement relatif des plaquettes rigides 165 et de l'entraîneur 120 est tel qu'il n'y a pas de frottements significatifs entre ces éléments pour un bon fonctionnement de l'ensemble.

On comprend alors que l'appui d'un doigt d'un utilisateur sur la touche de commande 150 entraîne le basculement de la touche de commande 150 autour de l'axe médian L, depuis un état stable, par exemple basculée du côté droit, vers un autre état stable, basculée du côté gauche, et le déplacement d'une ou des plaquettes rigides 165 par l'appui d'un plot 152 prévu sur la face arrière 159 de ladite touche de commande 150. Cette plaquette rigide 165, en se déplaçant, provoque le basculement de l'entraîneur 120 dont la partie supérieure 123 se trouve au droit de la ou des plaquettes rigides 165, et, ce faisant, l'ouverture ou la fermeture du circuit électrique du moteur 110. Grâce aux plaquettes rigides 165 qui, par leur déplacement, entraînent le basculement de l'entraîneur 120, on préserve l'intégrité de la partie 162A de la membrane souple d'étanchéité 162 fermant lesdites fenêtres 160 de la paroi frontale rigide 140 de l'enjoliveur 130, car cette membrane n'est pas directement sollicitée au cours du fonctionnement du commutateur électrique 100. La membrane souple d'étanchéité 162 joue alors parfaitement son rôle d'isolation au fil du temps et suit le mouvement des plaquettes rigides 165.

De manière avantageuse, lors du déplacement des plaquettes rigides 165, l'étanchéité du commutateur électrique 100 est garantie car la partie 162A de la membrane souple d'étanchéité 162 est suffisamment flexible, grâce à sa forme en soufflet, pour s'adapter aux mouvements de la plaquette rigide 165.

## Revendications

1. Enjoliveur (130) d'un commutateur électrique (100) étanche, cet enjoliveur (130) comportant une membrane souple d'étanchéité (162) et une paroi frontale rigide (140) comportant au moins une fenêtre (160) dans laquelle s'étend une plaquette rigide (165) destinée à être déplacée sous l'action d'une force de pression s'exerçant sur ladite plaquette rigide (165), ladite plaquette rigide (165) étant reliée au bord de la fenêtre (160) au moyen d'une partie (162A) de la membrane souple d'étanchéité (162), ladite partie (162A) de la membrane souple d'étanchéité (162) forme un soufflet (163) qui s'étend exclusivement entre tout le bord de ladite plaquette rigide (165) et tout le bord de ladite fenêtre (160) de sorte que ladite partie (162A) de la membrane souple d'étanchéité (162) obture seulement l'espace laissé libre entre la plaquette rigide (165) et le bord de la fenêtre (160) pour fermer ladite fenêtre (160), **caractérisé en ce que**
la plaquette rigide (165) étant reliée au bord de la fenêtre (160) au moyen d'une articulation reliant deux côtés longitudinaux du bord de ladite plaquette rigide (165) à deux côtés longitudinaux du bord de ladite fenêtre (160), et
en considérant une direction orthogonale à la plaquette rigide (165) dirigée de l'avant vers l'arrière de l'enjoliveur (130), ladite articulation étant formée par deux languettes (166) alignées selon un axe transversal (L) de ladite fenêtre (160), chaque languette (166) présentant une forme de vague dont une extrémité reliée au bord de la fenêtre (160) est située dans un premier plan (P1) et dont l'autre extrémité reliée au bord de ladite plaquette rigide (165) est située dans un deuxième plan (P2), positionné en dessous dudit premier plan (P1) selon ladite direction orthogonale, de sorte que la face avant (165A) de la plaquette rigide (165) est décalée vers l'arrière par rapport à la face avant (140A) de la paroi frontale rigide (140).

2. Enjoliveur (130) selon la revendication 1, dans lequel la fenêtre (160) présentant une forme allongée définie par un axe longitudinal (Z1, Z2) et ledit axe transversal (L), la plaquette rigide (165) est positionnée au centre de ladite fenêtre (160) selon ledit axe longitudinal (Z1, Z2) et ledit axe transversal (L).

3. Enjoliveur (130) selon l'une des revendications 1 et 2, dans lequel la plaquette rigide (165) et lesdites languettes (166) sont réalisées d'une seule pièce avec une partie de la paroi frontale rigide (140).

4. Enjoliveur (130) selon l'une des revendications 1 à 3, dans lequel ladite partie (162A) de la membrane souple d'étanchéité (162) recouvre la face avant desdites languettes (166).

5. Enjoliveur (130) selon l'une des revendications 1 à 4, dans lequel la plaquette rigide (165) et la fenêtre (160) associée présentent des formes concentriques oblongues.

6. Enjoliveur (130) selon l'une des revendications 1 à 5, dans lequel il est prévu au moins une touche de commande (150) comportant sur la face arrière (159) d'une paroi d'appui (155) d'un doigt d'un utilisateur au moins deux plots (152) destinés à prendre appui sur la plaquette rigide (165) pour la déplacer.

7. Enjoliveur (130) selon la revendication 6, dans lequel la paroi frontale rigide (140) porte des moyens de basculement de la touche de commande (150) entre deux positions stables.

8. Enjoliveur (130) selon l'une quelconque des revendications 1 à 7 dans lequel la membrane souple d'étanchéité (162) est réalisée par surmoulage d'une matière souple autour de la plaquette rigide (165).

9. Commutateur électrique (100) comprenant un moteur (110) pourvu d'un entraîneur (120) et un enjoliveur (130) selon l'une quelconque des revendications 1 à 8, ledit entraîneur (120) étant positionné en regard de ladite plaquette rigide (165) de l'enjoliveur (130) de manière que, lors de son déplacement, la plaquette rigide (165) est pressée contre l'entraîneur (120).

10. Commutateur électrique (100) selon la revendication 9, dans lequel le moteur (110) comprend un socle rapporté dans des aménagements d'une boîte électrique (10) pour le montage en saillie sur une paroi murale.

11. Commutateur électrique (100) selon la revendication 9, dans lequel le moteur (110) comprend un socle rapporté dans des aménagements d'un cadre pour le montage dans une ouverture d'encastrement.

## Patentansprüche

1. Zierblende (130) eines dichten elektrischen Schalters (100), wobei die Zierblende (130) eine weiche Abdichtungsmembrane (162) und eine steife frontale Wandung (140) mit mindestens einem Fenster (160) aufweist, in dem sich eine steife Platte (165) erstreckt, die dazu bestimmt ist, unter Einwirkung einer auf die steife Platte (165) ausgeübten Druckkraft verlagert zu werden, wobei die steife Platte (165) mittels eines Teils (162A) der weichen Abdichtungsmembrane (162) mit dem Rand des Fensters (160) verbunden ist, wobei der Teil (162A) der weichen Abdichtungsmembrane (162) einen Balg (163) bildet, der sich ausschließlich zwischen dem gesamten Rand der steifen Platte (165) und dem gesamten Rand des Fensters (160) erstreckt, so daß der Teil (162A) der weichen Abdichtungsmembrane (162) nur den zwischen der steifen Platte (165) und dem Rand des Fensters (160) frei gelassenen Raum abdeckt, um das Fenster (160) zu schließen,
**dadurch gekennzeichnet, daß**
die steife Platte (165) mit dem Fensterrand (160) mittels eines Gelenks verbunden ist, das zwei Längsseiten des Rands der steifen Platte (165) mit zwei Längsseiten des Rands des Fensters (160) verbindet, und,
unter Berücksichtigung einer zur steifen Platte (165) senkrechten Richtung, die von der Vorderseite zur Rückseite der Zierblende (130) gerichtet ist, daß das Gelenk aus zwei Zungen (166) gebildet ist, die auf eine Querachse (L) des Fensters (160) ausgerichtet sind, wobei jede Zunge (166) eine Wellenform aufweist, deren mit dem Rand des Fensters (160) verbundenes Ende in einer ersten Ebene (P1) gelegen ist und deren mit dem Rand der steifen Platte (165) verbundenes anderes Ende in einer in der senkrechten Richtung unter der ersten Ebene (P1) gelegenen zweiten Ebene (P2) gelegen ist, so daß die Vorderseite (165A) der steifen Platte (165) gegenüber der Vorderseite (140A) der steifen frontalen Wandung (140) nach hinten versetzt ist.

2. Zierblende (130) gemäß Anspruch 1, wobei das Fenster (160) eine durch eine Längsachse (Z1, Z2) und die Querachse (L) definierte längliche Form aufweist, wobei die steife Platte (165) im Zentrum des Fensters (160) gemäß der Längsachse (Z1, Z2) und der Querachse (L) abgeordnet ist.

3. Zierblende (130) gemäß einem der Ansprüche 1 und 2, wobei die steife Platte (165) und die Zungen (166) zusammen mit einem Teil der steifen frontalen Wandung (140) in einem Stück hergestellt sind.

4. Zierblende (130) gemäß einem der Ansprüche 1 bis 3, wobei der Teil (162A) er weichen Abdichtungsmembrane (162) die Vorderseite des Zungen (166) abdeckt.

5. Zierblende (130) gemäß einem der Ansprüche 1 bis 4, wobei die steife Platte (165) und das zugehörige Fenster (160) längliche konzentrische Formen aufweisen.

6. Zierblende (130) gemäß einem der Ansprüche 1 bis 5, wobei mindestens eine Steuertaste (150) vorgesehen ist, die auf der Rückseite (159) einer Druckwand (155) für einen Finger eines Benutzers mindestens zwei Noppen aufweist, die dazu bestimmt sind, auf der steifen Platte (165) aufzuliegen, um sie zu verlagern.

7. Zierblende (130) gemäß Anspruch 6, wobei die steife frontale Wandung (140) Mittel zum Kippen der Steuertaste (150) zwischen zwei stabilen Positionen aufweist.

8. Zierblende (130) gemäß einem der Ansprüche 1 bis 7, wobei die weiche Abdichtungsmembrane (162) durch Spritzen eines weichen Materials um die steife Platte (165) herum gefertigt ist .

9. Elektrischer Schalter (100) mit einem mit einem Mitnehmer (120) versehenen Motor (110) und einer Zierblende (130) gemäß einem der Ansprüche 1 bis 8, wobei der Mitnehmer (120) gegenüber der steifen Platte (165) der Zierblende (130) angeordnet ist, so daß bei dessen Verlagerung die steife Platte (165) gegen den Mitnehmer (120) gedrückt wird.

10. Elektrischer Schalter (100) gemäß Anspruch 9, wobei der Motor (110) einen in Einrichtungen einer Elektrodose (10) eingebrachten Sockel für eine Aufputzmontage auf einer Wand aufweist.

11. Elektrischer Schalter (100) gemäß Anspruch 9, wobei der Motor (110) einen in Einrichtungen eines Rahmens eingebrachten Sockel für eine Montage in einer Einbauöffnung aufweist.

## Claims

1. Trim (130) of a sealed electrical switch (100), this trim (130) comprising a flexible sealing membrane (162) and a rigid front wall (140) comprising at least one window (160), wherein a rigid plate (165) extends, intended to be moved under the action of a pressure force being exerted on said rigid plate (165), said rigid plate (165) being connected to the edge of the window (160) by means of a part (162A) of the flexible sealing membrane (162), said part (162A) of the flexible sealing membrane (162) forms a gusset (163) which extends exclusively between the entire edge of said rigid plate (165) and the entire edge of said window (160), such that said part (162A) of the flexible sealing membrane (162) only blocks the space left free between the rigid plate (165) and the edge of the window (160) to close said window (160), **characterised in that** the rigid plate (165) being connected to the edge of the window (160) by means of a hinge connecting two longitudinal sides of the edge of said rigid plate (165) to two longitudinal sides of the edge of said window (160), and
by considering a direction orthogonal to the rigid plate (165) directed from the front to the rear of the trim (130), said hinge being formed by two strips (166) aligned about a transverse axis (L) of said window (160), each strip (166) having a wave shape, an end of which connected to the edge of the window (160) is located in a first plane (P1), and the other end of which connected to the edge of said rigid plate (165) is located in a second plane (P2), positioned below said first plane (P1) in said orthogonal direction, such that the front face (165A) of the rigid plate (165) is offset rearwards with respect to the front face (140A) of the rigid front wall (140).

2. Trim (130) according to claim 1, wherein the window (160) having an elongated shape defined by a longitudinal axis (Z1, Z2) and said transverse axis (L), the rigid plate (165) is positioned at the centre of said window (160) about said longitudinal axis (Z1, Z2) and said transverse axis (L).

3. Trim (130) according to one of claims 1 and 2, wherein the rigid plate (165) and said strips (166) are made of one single part with a part of the rigid front wall (140).

4. Trim (130) according to one of claims 1 to 3, wherein said part (162A) of the flexible sealing membrane (162) covers the front face of said strips (166).

5. Trim (130) according to one of claims 1 to 4, wherein the rigid plate (165) and the associated window (160) have oblong concentric shapes.

6. Trim (130) according to one of claims 1 to 5, wherein at least one control button (150) is provided, comprising on the rear face (159) of a support wall (155) of a finger of a user, at least two studs (152) intended to bear on the rigid plate (165) to move it.

7. Trim (130) according to claim 6, wherein the rigid front wall (140) carries means for tilting the control button (150) between two stable positions.

8. Trim (130) according to any one of claims 1 to 7, wherein the flexible sealing membrane (162) is made by overmoulding a flexible material around the rigid plate (165).

9. Electrical switch (100) comprising a motor (110) provided with a driver (120) and a trim (130) according to any one of claims 1 to 8, said driver (120) being positioned facing said rigid plate (165) of the trim (130) such that, during its movement, the rigid plate (165) is pressed against the driver (120).

10. Electrical switch (100) according to claim 9, wherein the motor (110) comprises a base returned in arrangements of an electrical box (10) for the projecting mounting on a wall panel.

11. Electrical switch (100) according to claim 9, wherein the motor (110) comprises a base returned in arrangements of a frame for the mounting in an installation opening.
